Europäisches Patentamt

European Patent Office

Office européen des brevets

(11) Publication number: **0 321 310**
**A2**

(12) **EUROPEAN PATENT APPLICATION**

(21) Application number: **88311994.3**

(22) Date of filing: **19.12.88**

(51) Int. Cl.⁴: **B 60 G 17/04**

(30) Priority: **17.12.87 GB 8729475**

(43) Date of publication of application:
**21.06.89 Bulletin 89/25**

(84) Designated Contracting States: **DE FR GB IT**

(71) Applicant: **AUTOMOTIVE PRODUCTS PLC**
**Tachbrook Road**
**Leamington Spa Warwickshire CV31 3ER (GB)**

(72) Inventor: **Bass, Richard Arnold**
**18 Southview Road Cubbington**
**Leamington Spa Warwickshire. CV32 7JD (GB)**

(74) Representative: **Adkins, Michael et al**
**4 Dyer's Buildings Holborn**
**London EC1N 2JT (GB)**

(54) **Vehicle suspension.**

(57) The vehicle suspension comprises first and second pairs of wheels 10, 11 connected to a vehicle structure by respective first and second pairs of fluid filled struts 15, 24. The first pair of struts is connected to the second pair of struts through fluid flow paths P', P'' whereby changes in fluid pressure applied to one strut of the first pair will be transmitted to one strut of the second pair to resist roll of the vehicle. A control valve 32', 32'' is provided in each path P', P'' to control the fluid flow along its path. Each valve includes a valve member 39 movable against a resistance in response to pressure in the upstream part of the path at which the valve member will move to allow fluid to flow along the path between the struts 15, 24 of that path can be varied by operation of the load ratio control means 61.

FIG. 2.

**Description**

## VEHICLE SUSPENSION

The invention relates to a vehicle suspension primarily for road vehicles such as racing cars or passenger cars.

In UK-A-1384454 there is described a vehicle suspension on a wheel mounted structure comprising first and second pairs of wheels connected to the structure by respective first and second pairs of fluid filled struts, the first pair of struts being connected to the second pair of struts through fluid flow paths whereby changes in fluid pressure applied to one of the first pair of struts will be transmitted to one of the second pair of struts to control the force applied by the second pair of struts to resist roll of the structure. Further suspensions are described in GB-A-2071587, GB-2039834 and GB-A-1446145. In all of the foregoing suspensions fluid flow systems are effectively fixed for the vehicles in which they are installed so that the system will provide a given reaction for any given cornering load applied to the suspension. Whilst such systems may be satisfactory for general road use, they can be disadvantageous in racing cars where the handling requirements for the vehicle will be different for each racing circuit. An object of the present invention is to provide an improved vehicle suspension which reduces the aforesaid disadvantage.

According to the invention there is provided a vehicle suspension on a wheel mounted structure comprising first and second pairs of wheels connected to the structure by respective first and second pairs of fluid filled struts, the first pair of struts being connected to the second pair of struts through fluid flow paths whereby changes in fluid pressure applied to one strut of the first pair will be transmitted to one strut of the second pair to resist roll of the structure, and control valve means in each path to control the fluid flow along its path, each control valve means including a valve member movable against a resistance in response to pressure in part of said path, a variable load ratio control means being provided to enable the load required to move the valve member against the resistance be varied whereby the pressure in said part of the path at which the valve member will move to allow fluid to flow between the struts of said path can be varied by operation of the load ratio control means.

Such an arrangement is advantageous as the load ratio control means can be adjusted at will to match the handling requirements to particular racing circuits.

That is not possible with the prior art suspensions where the systems effectively provide fixed handling characteristics which in a racing vehicle may be ideal for circuit but quite unsuitable for another.

The valve member preferably applies load to the resistance through the load ratio control means which may take the form of an adjustable mechanical transmission. The adjustment may be effected from a remote position by, e.g., a cable for simplicity and convenience.

Where the load ratio control means is of a mechanical type, it may comprise pivotally mounted lever means which provides a load transmission device whereby an input load applied to one portion of the lever means provides output at another portion of the lever means at a desired input to output load ratio. In such a case the lever means may comprise first and second pivotally mounted and co-operable levers, one of which receives in input load and the other of which provides the output load. One of the levers may be of variable length to enable the ratio between input and output loading to be varied. That one lever may comprise a first section which is pivotally mounted and a second section movable along the fist section, the second section preferably having an end part which abuts the other lever during transmission of load through the load ratio control means. The second section may be movable along the first section by sensor means. The end part may be ball-like.

It will be seen, therefore, that the load ratio control means may of simple construction enabling roll characteristics to be easily varied to provide the vehicle handling requirements.

In the preferred embodiment, there will be load ratio control means, one for each control valve means and, for convenience of operation, the two load ratio control means may be arranged whereby a single adjustment will adjust the two load ratio control means simultaneously.

Preferably, the resistance is provided by a second valve member to which is applied fluid under pressure. The load ratio control means in such a case may be conveniently disposed between the two valve members to enable load from one valve member to be transmitted through the load ratio control means to the other of the valve members.

The two valve members may be coaxial.

Where the load ratio control means includes two levers, the levers may include abutment portions which engage portions associated with the respective first and second valve members.

Preferably pressure of fluid in a second part of the flow path downstream of the first said valve member is applied to the second valve member to provide the resistance.

The first said valve member may include a non-return valve which is arranged to open and allow fluid to flow along the path between the first strut and the second strut after the valve member is moved against the resistance position by the pressure of fluid in part of the path upstream of the first valve member. Where first and second valve members are provided, the second valve member may include a non-return valve which is arranged to open and allow fluid to flow in the path between the second strut and the first strut after the valve the valve member is moved against a resistance by pressure of fluid in part of the path upstream of the second valve member.

Preferably, the pressure of fluid downstream of the first valve member causes the second valve member to resist further movement of the first valve member and when pressure in the path upstream and downstream of the first valve member is balanced the load applied by the second valve member results in the non-return valve of the first valve member closing to prevent further flow of fluid from said first towards the second strut. The first valve member preferably undergoes a shuttling movement until the point of balance is reached.

In the same way that the first valve member moves against the resistance of the second valve member to control the flow of fluid from the first strut towards the second strut, the second valve member may move against a resistance provided by the first valve member to control flow of fluid from the second strut towards the first strut, the load ratio control means in such a case preferably enabling the load required to move the second valve member against the resistance provided by the first valve member to be varied.

The second non-return valve in the second valve member may be arranged to close to prevent further fluid flowing from the second strut towards the first strut once pressure balances across the second valve member is achieved. The second valve member preferably undergoes a shuttling movement until the point of a balance is reached.

For simplicity of construction and to maintain manufacturing costs to a minimum, the first and second valve members preferably form parts of valves which are of substantially identical construction.

Preferably each path includes two path sections, flow along the first of which is controlled by the first valve member whereby fluid flowing in said one direction along the path flows through the first section, and flow along the second of which is controlled by the second valve member whereby fluid flowing in said opposite direction along the path flows through the second section. Preferably, one way valve means is provided in each path section to permit flow only in one direction therethrough.

A vehicle suspension in accordance with the invention will now be described by way of example with reference to the accompanying drawings in which:-

Fig. 1 is a diagram of a suspension system in accordance with the invention applied to a vehicle and

Fig. 2 is a longitudinal cross-section to a larger scale of a valve in Fig.1 for controlling pressure at which fluid can flow between struts at the front right and rear left of the vehicle suspension of Fig.1.

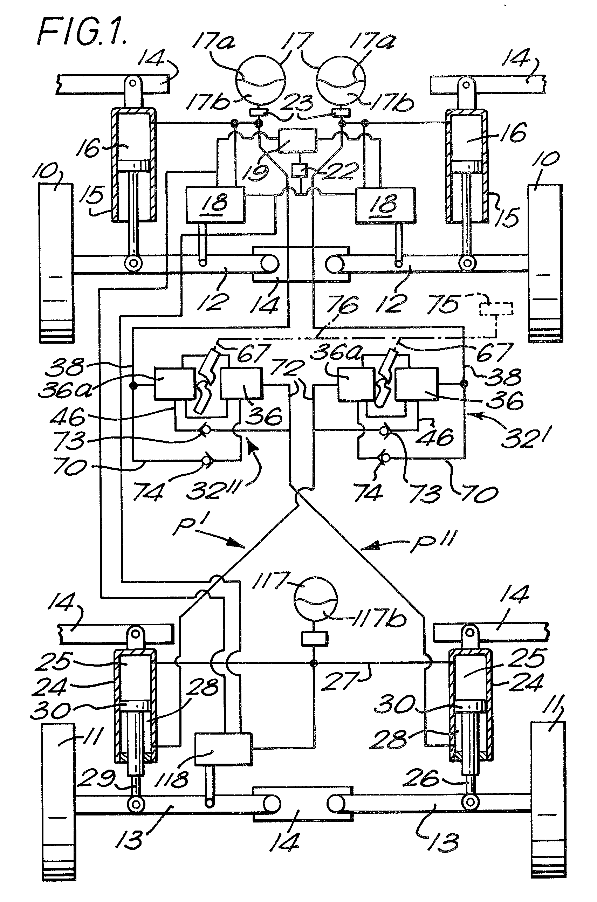

Referring to Fig.1 of the drawings the diagram shows a suspension system for a four-wheeled vehicle, the rearwheels being shown at 10 and the front wheels at 11. Each rear wheel is connected to the vehicle structure by radius arm 12 and each front wheel is connected to the vehicle structure by a radius arm 13. It is to be understood that the radius arms 12 and 13 may be components of suspension linkages of any type. Various parts of the vehicle structure are indicated by the reference 14 and it is to be understood that these parts are all connected together.

Between each radius arm 12 and a part of the above mentioned vehicle structure there is mounted a telescopic strut 15 having a liquid filled chamber 16 through the liquid in which the load supported by that wheel is transmitted to an enclosed body of compressed gas in a chamber 17 and the liquid filled chamber is also connected to a valve 18, acting to place the said chamber 16 selectively in communication with a source of liquid pressure, shown as pump 19, or with a drain leading to a low pressure reservoir 22.

The gas containing chambers 17 are separated by movable walls such as flexible diaphragms 17a from liquid containing chambers 17b connected to the chambers 16 through flow restricting valves 23 which provide damping of the relative movement of the wheels 11 and the vehicle structure 14. The operation of the valves 18 is described in detail in UK No. 1384454 to which the reader is directed. Alternatively, the valve 18 could be electronically controlled valves which are sensitive to roll and other suspension/vehicle movements.

Between each radius arm 13 and a part of the vehicle structure 14 there is mounted a telescopic strut 24. The struts 24 have upper chambers 25, which are directly interconnected by a line 27, and lower chambers 28. Each strut 24 has a ram unit 29 having a piston 30. The chamber 28 of the front left strut 24 as viewed in the drawings is connected to the chamber 16 of the rear right strut 15 along a path P' via a first flow control device 32' and the chamber 28 of the front right strut 24 is connected to the chamber 16 of the rear left strut 15 along a path P" via an identical second flow control device 32". A further body 117 similar to body 17 is connected to line 27 and to a valve 118 which responds to longitudinal tilting of the vehicle to place a liquid filled chamber 117b selectively in communication with pump 19 or drain.

The arrangment is such that, when the vehicle changes direction, the chamber 16 of the strut 15 associated with the rear wheel 10 on the outer side of the curve of its path is connected to the pressure source. Additional liquid therefore tends to be supplied to that chamber 16. At the same time, the chamber 16 of the strut 15 associated with the rear wheel on the inner side of the curve of the vehicle path is connected to drain so that liquid tends to be drained therefrom. A roll reaction is thus created which acts to oppose rolling of the vehicle. The valve 118 and body 117 act so as to oppose dipping of the front of the vehicle during braking.

Since the chamber 28 in the struts 24 associated with the front wheels of the vehicle are respectively connected through paths P', P" to the chamber 16 of the strut 15 associated with the rear wheel on the opposite side of the vehicle, liquid also tends to be supplied via the associated control valve 32' to the chamber 28 of the strut 24 associated with the front wheel on the outer side of the curve, so that a roll reaction is also set up at the front end of the vehicle, but under the control of the roll-creating forces at the rear wheels.

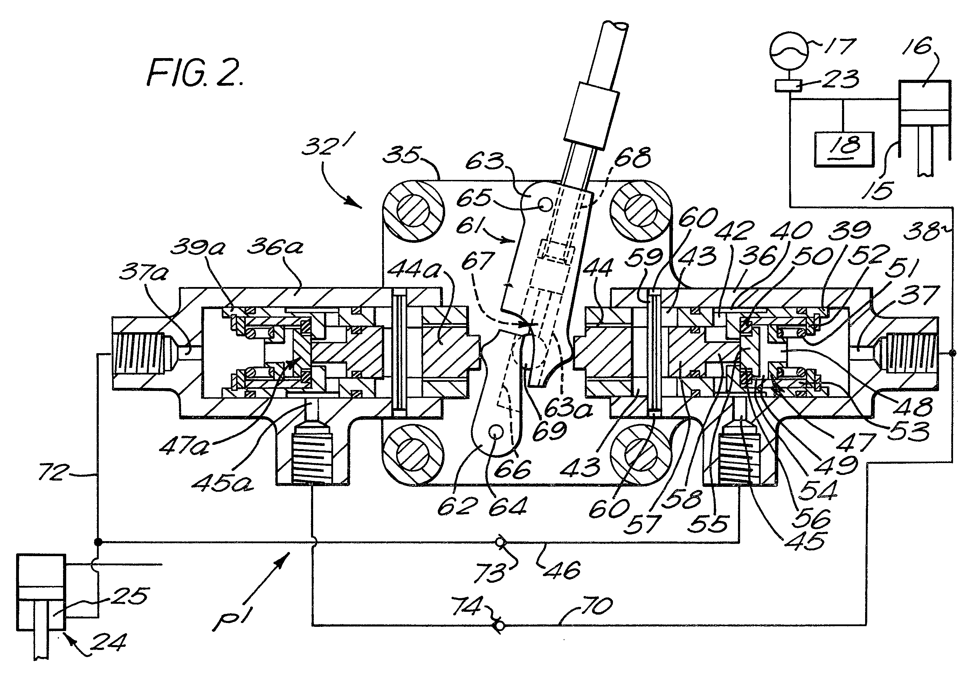

The operation of the identical control valves 32' 32" will now be described with particular reference to Fig. 2 which is a cross-section through valve 32'.

The valve 32' comprises a mounting plate 35 for two coaxial cylinders 36, 36a. The cylinder are mirror images of each other and contain identical valve components. The components in the cylinder 36a which correspond to these in cylinder 36 carry the same reference numeral followed by the designation "a". For clarity only certain components in cylinder 36a are numbered.

The cylinder 36 is formed with an inlet port 37 which communicates with the chamber 16 of strut 15 through a line 38. The cylinder 36 contains an annular piston 39 formed with a wide peripheral groove 40 in communication with radial ports 42, two diametrically opposed and axially extending slots 43 and a screw-threaded end in which is screwed a projecting abutment 44. The groove 40 spans an outlet port 45 which communicates with cylinder 25 of strut 24 through a line 46. The annular piston 39 houses a non-return valve member 47 formed with respective and interconnecting axial and radial bores 48, 49 and is biased sealingly against a seat 50 by a spring 51 reacting against a stop 52 on piston 39. The non-return valve member 47 is slidable axially within a sleeve 53 so as to define an annular clearance 54 and has a reduced diameter portion 55 which is received within the seat 50 so as to define an annular clearance 56. the piston houses an operating member 57 which is freely slidable within the piston and which has a finger 58 which extends axially towards the non-return valve member 47. A pin, e.g., a roll pin, 59 is a push fit in diametrically opposed bores 60 in the cylinder 36 and passes with working clearance through the slots 43 in the piston 39. The pistons 37, 39a constitute the aforesaid first and second members.

The projecting ends of abutments 44a, 44 engage rounded abutment surface of respective levers 62, 63 of a load ratio control 61, the levers being pivotally mounted at 64, 65 on the mounting plate 35. The lever 62 has an elongate groove 66 therein along which can move a ball 69 mounted on a rod 67 which is mounted for axial adjustment on the lever 63. The upper end of the rod 67 is screw threaded and engages in a screw threaded bore 68 in the lever 63. Rotation of the rod will move it axially so as to vary the position of the ball 69 in relation to the groove 66 in lever 62. The lever 63 has a tract 63a for the ball 69 which supports the ball during operation of the valve.

The line 38 communicates through a line 70 with the outlet port 45a and the line 46 communicates with the inlet 37a through a line 72. The line 46 and 70 constitute the aforesaid first and second sections of the path P' and include respective one way valves 73, 74.

In operation and with the chamber 16 connected to the pressure source 19 by valve 18 during cornering, the pressure will be applied simultaneously to lines 38 and 70. Fluid is unable to flow along line 70 from the source in view of one way valve 74. However pressure in line 38 is applied through the inlet 37 and urges piston 39 to the left as viewed in Fig. 2. The piston urges the abutment 44 against the lever 63 and turns it clockwise about pivot 65. The lower end 69 of the rod 67 turns the lever 62 anticlockwise about pivot 64. However, as the distance between pivot 65 and the point of engagement of the ball 69 with the lever 62 is greater than the distance between the pivot 64 and the point of engagement of the ball 69 with the lever 62, the input load exerted by abutment 44 on abutment surface lever 63 will be greater than the output load exerted by abutment 44a. The ratio of input to output load can be varied by adjusting the axial position of the rod 67 to move the ball 69 along the track 63a. The cylinder 36 is filled with fluid at line 72 pressure and whilst that will be less than the pressure in line 38 it creates a resistance to movement of pistol 39a to the left as fluid from line 72 enters chamber 25.

The degree of resistance that piston 39a presents to piston 39 and therefore the pressure required in line 38 to move the piston 39 is dependent upon the setting of rod 67. The movement of piston 39 to the left eventually brings operating member 57 into abutment with the roll pin 59. Continued movement of the piston 39 causes the finger 58 to lift the non-return valve member 47 off the seat 50 whereupon fluid from the inlet 37 flows through the annular clearances 54, 56 through the radial ports 40 around groove 42, through the outlet port, 45, along line 74, through valve 73 and into chamber 25 of strut 24. Fluid from line 46 also flows through line 72 so as to bring the pressure in cylinder 36a up to he pressure in line 38. The increase in pressure in cylinder 36a causes the piston 39a to move to the right loading levers 62, 63 and causing piston 39 to move back assisted by spring 51 until the non-return valve member 47 re-engages the seat 50 to cut off the supply of further fluid to the chamber 25. The movement of the pistons 39, 39a is a rapid shuttling movement during build up of pressure in line 38 until a steady pressure balance is achieved on the pistons.

When cornering in an opposite sense, the chamber 16 is connected to drain by the valve 18 whereby the pressure in line 72 then causes piston 39a to move to the right against the resistance of piston 39 until the non-return valve member 47a is lifted off its seat 50a to allow fluid from chamber 25 to escape via line 72, cylinder 26a, outlet 45a, one-way valve 74 line 70 and line 38 to drain. Once the pressures in cylinders 36, 36a equalize, the non-return valve member 47a re-seats to prevent further drain of fluid from the chamber 25. Again, movement of the pistons 39a, 39 is a rapid shuttling movement which continues during rising pressure until pressures balance.

It will be appreciated that the valve 32' controls the pressure at which fluid can flow between struts 15, 24 and that the degree of control can be varied infinitely by adjustment of the load ratio control 61. By appropriate adjustment, the build up to roll resistance pressure in chambers 16 and 25 can be controlled, for example to match handling requirements to particular racing circuits.

In order to control the pressure at which fluid can flow between the struts 15, 24 for the remaining wheels the control valve 32" is used. Preferably the rods 67 of each load ratio control 61 are ganged together, e.g., through suitable gearing so that they can be adjusted simultaneously by means of a emote adjustment 75 via a cable 76.

The term "drain" as used herein embraces flow from a part fluid circuit at one pressure to flow to a part of the circuit at a lower pressure.

## Claims

1. A vehicle suspension on a wheel mounted structure comprising first and second pairs of wheels (10, 11) connected to the structure by respective first and second pairs of fluid filled struts (15, 24), the first pair of struts being connected to the second pair of struts through fluid flow paths (P', P'') whereby changes in fluid pressure applied to one of the first pair of struts will be transmitted to one of the second pair of struts to resist roll of the structure characterised in that control valve means (32', 32'') is provided in each path (P', P'') to control the fluid flow along its path, each control valve means includes a valve member (39) movable against a resistance in response to pressure in part (38) of said path, and a variable load ratio control means (61) is provided to enable the load required to move the valve member (39) against the resistance to be varied whereby the pressure in said part (38) of the path (P') at which the valve member (39) will move to allow fluid to flow along the path (P') between the struts (15, 24) of that path can be varied by operations of the load ratio control means (61).

2. A vehicle suspension according to Claim 1 in which the valve member (39) is movable against the resistance through the load ratio control means (61).

3. A vehicle suspension according to Claim 2 characterised in that the load ratio control means comprises pivotally mounted lever means (62, 63) which provides a load transmission device whereby an input load applied one portion (63) of the lever means provide an output load at another portion (62) of the lever means at a desired input to output load ratio.

4. A vehicle suspension according to Claim 3 characterised in that lever means comprises first and second pivotally mounted and co-operable levers (62, 63), one of which receives in input load and the other of which provides the output load.

5. A vehicle suspension according to Claim 4 characterised in that one of the levers (63) is of variable length to enable the ratio between input and output loading to be varied.

6. A vehicle suspension according to any preceding characterised in that the resistance is provided by a second valve member (39a) to which is applied fluid under pressure.

7. A vehicle suspension according to Claim 6 characterised in that pressure of fluid in a second part (72) of the flow path (P') downstream of the first said valve member (39) is applied to the second valve member (39a) to provide the resistance.

8. A vehicle suspension according to any preceding claim characterised in that the valve member (39, 39a) includes a non-return valve (47, 47a) which is arranged to open and allow fluid to flow along the path (P') between the first strut (15) and the second strut (24) as a result of movement of the valve member (39) against the resistance.

9. A vehicle suspension according to Claim 8 characterised in that the pressure of fluid downstream of the first valve member (39) causes the second valve member (39a) to resist further movement of the first valve member and when pressure in the path upstream and downstream of the first valve member (39) is balanced the load applied by the second valve member (39a) results in the non-return valve (47) of the first valve member closing to prevent further flow of fluid along the path (P') between said first strut (15) and the second strut (24).

10. A vehicle suspension according to Claim 9 characterised in that at least the first valve member (39) undergoes a shuttling movement until the point of balance is reached.

11. A vehicle suspension according to any of Claims 6 to 10 characterised in that the first valve member (39) moves against the resistance of the second valve member (39a) to control the flow of fluid in one direction along the path (P') between and first strut (15) to the second strut (24) and in the same way the second valve member (39a) moves against a resistance provided by the first valve member (39) to control flow of fluid in an opposite direction along the path (P') the load ratio control means (61) also controlling the load required to move the second valve member (39a) against the resistance provided by the first valve member (39).

12. A vehicle suspension according to Claim 11 characterised in that each path (P', P'') includes two path sections (46, 70), flow along the first (46) one of which is controlled by the first valve member (39) whereby fluid flowing in said one direction along the path flows through the first section, and flow along the second of which is controlled by the second valve member (39a) whereby fluid flowing in said opposite direction along the path flows through the second section.

13. A vehicle suspension according to any preceding claim characterised in that the load ratio control means (61) for each control valve means (32', 32'') are ganged together to enable both load ratio control means to be adjusted simultaneously.

EP 0 321 310 A2

FIG.1.

FIG. 2.

EP 0 321 310 A2